# EUROPEAN PATENT APPLICATION

(11) **EP 3 313 071 A1**
(43) Date of publication of application: **25.04.2018**
(21) Application number: 16814309.7
(22) Date of filing: 20.06.2016
(51) Int. Cl.: H04N 13/02, H04N 13/04

(54) **METHOD FOR PROVIDING BINOCULAR STEREOSCOPIC IMAGE, OBSERVATION DEVICE, AND CAMERA UNIT**

(30) Priority: 22.06.2015 JP 2015124978
(71) Applicant: Zenkei Kabushiki Kaisha, Kanazawa-shi, Ishikawa 920-0047 (JP)
(72) Inventor: ICHIKI Kengo, Kanazawa-shi Ishikawa 920-0047 (JP)
(74) Representative: TBK
(86) International application number: PCT/JP2016/068272
(87) International publication number: WO 2016/208539

(57) **Abstract**

[Problem]

The present invention pertains to a technical means for providing a binocular stereoscopic image of full azimuth and overall height in a camera-installed location, the present invention obviating a process that takes a long time, such as a process for linking together images photographed by a plurality of cameras, and making it possible to deliver an omnidirectional binocular stereoscopic live dynamic image. [Solution] The present invention comprises installing, at a location where observation is to be carried out, a camera unit 1 in which a plurality of omnidirectional cameras are positioned at each vertex of a regular polygon. Simultaneously photographed images Bi (i = 1-n) photographed by the plurality of cameras are combined into one set of images C, which is then provided to an observation device. The observation device selects, in accordance with the direction of observation by an observer, two photographed images Bi, Bi±1 on either side of the aforementioned direction as images for the left and right eyes from the one set of pictures C, extracts an image to be displayed on a display from the selected photographed images, and displays the extracted image.

## Description

### TECHNICAL FIELD

The present invention relates to a method of providing a binocular stereoscopic image in an entire celestial sphere (an omnidirectional state and a whole height) or in an omnidirectional state (a whole periphery) at an installation place of a camera, a device for observing the image and a camera unit.

### BACKGROUND ART

The applicant of the present invention discloses a method of providing an omnidirectional binocular stereoscopic image at an installation place of a camera with patent document 1. This method creates omnidirectional screens for a left eye and a right eye by arranging a plurality of omnidirectional cameras at a distance which corresponds to a distance between human both eyes, and cutting out and joining display screens for the left eye and the right eye of which the respective cameras take partial charge, on the basis of the omnidirectional screens acquired by the cameras. Further, the method cuts out of the respective omnidirectional screens rectangular screens for the left eye and the right eye in a direction which an observer is going to view, and displays the rectangular screens on a display of the observer.

Further, a camera photographing an entire-celestial-sphere image at a camera installation place is disclosed, for example, in patent document 2. This kind of camera generally converts an image which is photographed by a plurality of fisheye lenses into a rectangular image in which a ratio between height and width is 1 : 2 with being omnidirectional (360 degrees) and whole height (180 degrees) while having an upper edge which is directly above and a lower edge which is directly below, and outputs the rectangular image.

### CITATION LIST

### PATENT DOCUMENT

Patent Document 1: Japanese Patent No. 4183466
Patent Document 2: Japanese Unexamined Patent Publication No. 2013-66163

### SUMMARY OF THE INVENTION

### PROBLEM TO BE SOLVED BY THE INVENTION

The method proposed by the patent document 1 prepares the omnidirectional screens for the left eye and the right eye by joining the images which are photographed by a plurality of cameras. In the case of joining the screens of two cameras which are different in the photographic center and the photographing direction, a minute deviation is generated in the image of the photographing object at the joint position. As a result, it is necessary to perform a correcting process for correcting the deviation when both the screens are joined.

However, since an amount of deviation in the joint is different according to a distance from the camera to the photographing object, it is difficult to correct. Further, since a complicated process is necessary for the correction, and it takes a long time to perform the process, an amount of processing becomes vast in the case that a video is going to be provided, and the live video can not be provided.

An object of this invention is to provide a means for delivering a binocular stereoscopic image in an entire celestial sphere or an omnidirectional state without performing the process for joining the entire-celestial-sphere or omnidirectional screens which are photographed by a plurality of cameras having the different photographing directions. According to this invention, it is possible to deliver the entire-celestial-sphere or omnidirectional binocular stereoscopic live video.

### MEANS FOR SOLVING PROBLEM

Omnidirectional or entire-celestial-sphere cameras Ai (i = 1 to n) are arranged at positions of respective vertices of a regular polygon in which a length of one side is set to be equal to a distance between human both eyes or is extended to such a range that is not unnatural in a stereoscopic view. Photographing screens Bi which are photographed by the respective cameras Ai at the same timing are formed into one set of screens C so as to be provided to an observation device 3.

When providing the entire-celestial-sphere image, a plurality of cameras Ai (i = 1 to n) and a holder 11 retaining the cameras are positioned outside an area of (2 x 360/n) + α degrees in a lateral direction centering on a direction passing through photographic centers P of the respective cameras from a center O of the regular polygon, and outside an area of 180 + β degrees in a height direction. Here, reference symbol α denotes a view angle in the lateral direction of a display 31 (31l, 31r) of the observation device 3 in relation to an observer, reference symbol β denotes a view angle in the height direction, and reference symbol n denotes a number of corners of the regular polygon. As a result, the observation device 3 can display on the display 31 an entire-celestial-sphere binocular stereoscopic image on which the cameras Ai and the holder 11 are not captured.

In the case that the provided image is an omnidirectional image, it is sufficient to position a plurality of cameras Ai and the holder 11 outside the area of β degree with regard to the height direction.

The observation device receiving the provision of a pair of screens C finds an observing direction of the observer, selects two photographing screens Bi and Bi ± 1 having a direction found from a pair of screens C therebetween as the screens for the left eye and the right eye, and cuts out display screens Dl and Dr having a width w which corresponds to the view angle α centering on the direction found from the selected screen and in the lateral direction of the displays 31l and 31r provided in the observation device and a height h which corresponds to the view angle in the height direction so as to display on the displays 31l and 31r.

Generally, the provision of a pair of screens is performed by a server 2 for delivering image via an internet 4. The observation device 3 receiving a pair of screens C via the internet 4 is provided with a receiving means 32 of the image, two displays 31l and 31r for displaying the images for the left eye and the right eye, a direction finding means 33 which finds a direction to which the goggle turns (the lateral direction and the height direction in the case of receiving the entire-celestial-sphere image, and at least the lateral direction in the case of receiving the omnidirectional image), a screen selecting means 34 which selects the screen for the left eye and the right eye from a pair of screens C in correspondence to the direction which the direction finding means 33 finds, a screen cut-out means 35 which cuts out the display screens Dl and Dr for the left eye and the right eye from the selected screens Bi and Bi ± 1, and a display means 36 which displays on the display the screen which is cut out.

### EFFECT OF THE INVENTION

According to the invention, it is possible to observe the image in the entire celestial sphere or the omnidirectional state in correspondence to the direction of the observation device in remote locations without joining the screens which are photographed by a plurality of cameras having charge of the image photographing in the respective directions.

Further, since a process of joining the screens is not necessary, the complicated process for the image data is not necessary and it does not take a long time to perform the data process. As a result, there is an effect that it is possible to provide the live video which necessarily delivers a lot of images in sequence.

### BRIEF DESCRIPTION OF DRAWINGS

Fig. 1 is a view of an entire structure of a hardware;
Fig. 2 is a perspective view of a camera unit;
Fig. 3 is a view showing a conversion of an image in a server;
Fig. 4 is a view showing an image processing means in an observation device;
Fig. 5 is a plan view of the camera unit and shows a photographing range of each of cameras;
Fig. 6 is a side elevational view of the camera unit and shows the photographing range of each of the cameras;
Figs. 7A and 7B are explanatory views showing that a display screen is cut out of a photographing screen;
Fig. 8 is an explanatory view showing how the photographing screen is selected; and
Fig. 9 is a side elevational view showing an example of the camera unit in which a lens distance can be changed.

### MODES FOR CARRYING OUT THE INVENTION

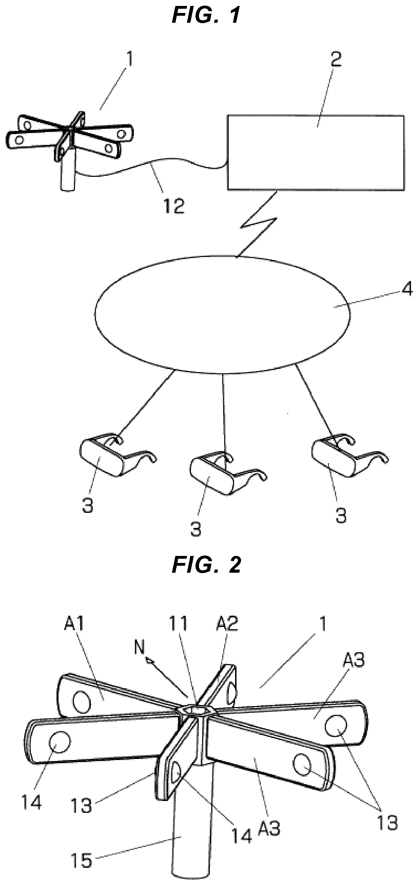

A description will be given below of an embodiment according to the invention with reference to the accompanying drawings. In Fig. 1, reference numeral 1 denotes a camera unit, reference numeral 2 denotes a computer for delivering image (hereinafter, refer to as "delivery server"), reference numerals 3, 3, denote an observation device of the delivered image (a terminal for stereoscopic view, hereinafter, refer to as "goggle"), and reference numeral 4 denotes an internet.

The cameral unit 1 is structured, as shown in Fig. 2 in an enlarged manner, such that n (six in the drawing) entire-celestial-sphere cameras Ai (i = 1 to n) are radially attached to a holder 11, and the holder 11 in Fig. 2 is attached to an upper end of a support post 15. Still images and videos photographed by the respective cameras Ai are sent to the delivery server 2 by cables 12 which are connected to the respective cameras. Each of the cameras Ai is provided with a plurality of (two in the drawings) lenses 13 and 14, and photographs an entire-celestial-sphere image centering on a center point between the lenses.

In order to obtain a binocular stereoscopic image, at least two cameras are necessary. The camera itself is not captured on the photographed image of each of the cameras Ai, however, the other camera arranged adjacently and the holder 11 retaining the camera are captured. A plurality of cameras Ai are installed to the holder 11 in such a manner that the entire-celestial-sphere images for the right eye and the left eye on which the adjacent cameras and the holder are not captured can be obtained from a plurality of images on which the adjacent cameras and the holder are captured.

In an example in the drawing, each of the cameras Ai is attached in such a manner that optical axes of the lenses 13 and 14 thereof are set to the same plane and the optical axes are oriented to directions of respective sides of the regular polygon on the plane. The holder 11 is positioned at the center of arrangement of a plurality of cameras Ai, and a plurality of cameras Ai are attached in such a manner that a direction in which the holder and the adjacent camera in the photographing image of the one camera are reflected can be compensated by the photographing image of the other camera. A plurality of cameras Ai are synchronously controlled so as to perform a photographing motion at the same timing in both of the still image and the video.

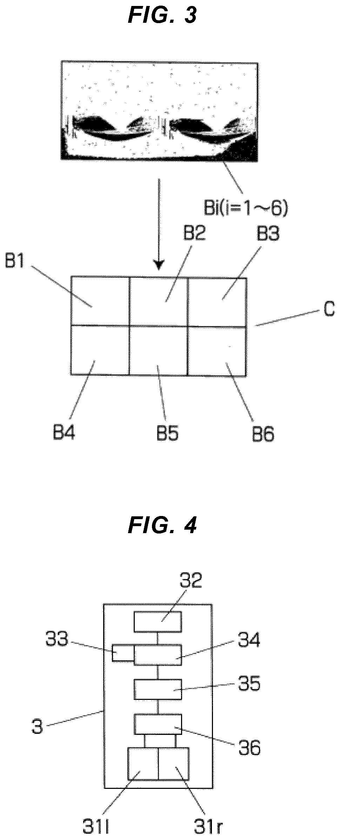

The delivery server 2 receives n photographing screens Bi which n cameras Ai of the camera unit simultaneously photograph and combines them into a set of screens C so as to deliver to the goggles 3, ... via the internet 4, as shown in Fig. 3. The photographing signals are simultaneously given to a plurality of cameras Ai, however, there is a case that it is impossible to accurately photograph at the same timing in some performance of the camera. In such the case, correction is performed for correcting a deviation of the photographing timing before combining a plurality of photographing screens Bi into a set of screens C. For example, the image is corrected by computing a displacement of the image in which the timing is deviated from the deviation between the images photographed at a short time interval.

The goggle 3 is provided with displays 31l and 31r for a left eye and a right eye, and a direction finding means 33 which finds a direction that an observer wearing the goggle see, at least a change of the seeing direction, such as a gyroscope sensor and an angular accelerometer, and a level and a compass. The goggle 3 is further provided with a screen selecting means 34 which selects the screens for the left eye and the right eye from n photographing screens Bi in a set of screens C in correspondence to the direction that the direction finding means 33 finds, a screen cut-out means 35 which cuts out display screens Dl and Dr reflected on the displays for the left eye and the right eye from the selected screen, and a display means 36 which displays the cut-out screens on the respective displays 31l and 31r.

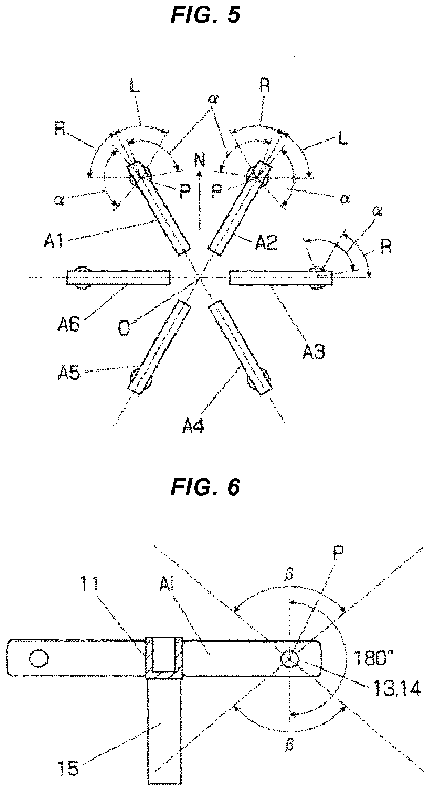

The camera unit 1 is assumed to be installed to turn a direction N of a bisector of the cameras A1 and A2 to the north corresponding to a reference direction as shown in Fig. 5. The goggle 3 can find its own direction from the reference direction in the case that the goggle 3 is provided with the compass. As a result, the goggle 3 selects the cameras arranged in both sides in the turning direction as the photographing screens Bi and Bi ± 1 for the right eye and the left eye, and the screen cut-out means 35 cuts out the display screens Dl and Dr which are reflected to the left and right displays 31l and 31r from the respective screens B1 and B2 and have a width w and a height h.

In the case that the goggle 3 is provided with the angular accelerometer and the level, and is specified so as to set the direction of the goggle when being powered on to the reference direction, the screen selecting means 34 selects the photographing screen B1 of the camera A1 as the screen for the left eye and the photographing screen B2 of the camera A2 as the screen for the right eye from the received one set of screens C, and the screen cut-out means 35 cuts out the display screens Dl and Dr which are reflected to the left and right displays 31l and 31r from the respective screens B1 and B2 and have the width w and the height h.

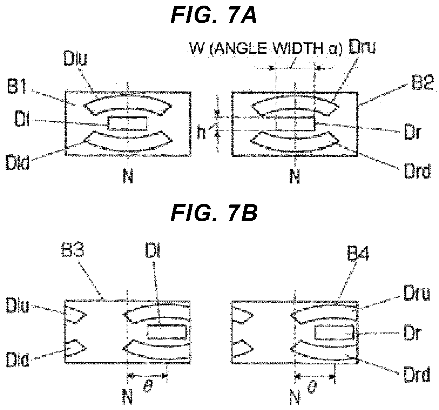

In the case that width centers of all the photographing screens B are set to the reference direction N of the camera unit, the display screens Dl and Dr for the left eye and the right eye are cut out in a state in which the width centers of the photographing screens B1 and B2 are the width centers of the display screens, the display screens Dl and Dr being cut out when the goggle turns to the reference direction, as shown in Fig. 7A.

In the drawings and the following description, the cut-out screen is formed into a simple rectangular shape or fan shape, however, the display of the goggle is not limited to the simple rectangular shape, and an eyeglass is generally attached to the goggle and a strain may be generated in the image on the display. Therefore, the cut-out screens Dl and Dr are cut out with shapes which correspond to the display and the eyeglass.

In the goggle for the entire-celestial-sphere binocular stereoscopic viewing, when the goggle is turned upward without changing its direction in the lateral direction, the cut-out display screens Dlu and Dru move upward, however, the screens cut out when turning the goggle upward expand in the lateral direction as turning upward and form the screens Dlu and Dru which are deformed in a fan shape in which the upper side is wider than the lower side, since the spherical surface is developed to the cylindrical surface. When the goggle is turned downward from the horizontal state, the screens come to the screens Did and Drd which are deformed to a fan shape in which the lower side expanded in the lateral direction is longer than the upper side.

The display means 36 converts the screens Dl and Dr cut out of the equator into appropriate images which correspond to an angle of view and an eyeglass of the goggle so as to display on the displays 31l and 31r. In the goggle for the entire-celestial-sphere binocular stereoscopic viewing which is turned upward or downward, the screens Dlu and Dru or Did or Drd which are cut out into the wide fan shape are converted into the screens having the same aspect ratio as that of the display screens Dl and Dr on the equator so as to be displayed on the respective displays.

When the direction of the goggle 3 is moved in a clockwise direction from the reference direction N, centers of the display screens Dl and Dr cut out of the photographing screens B1 and B2 also move rightward according to the direction in which the goggle turns. In the case that the direction of the goggle changes only in the lateral direction at the same height, the width w of the cut-out display screen is fixed. In the case of six cameras, the display screens Dl and Dr for the left eye and the right eye are cut out respectively in a state in which the width centers are set to the directions in which the goggle turns from the photographing screens B1 and B2, during the period that the direction of the goggle is within 30 degrees left and right (± 30 degree) from the reference direction.

When the direction of the goggle 3 goes beyond ± 360/2n degrees (a half angle of the distance at which the cameras Ai are arranged, ± 30 degree in the case of n = 6) from the reference direction N, the photographing screen is converted. More specifically, in the case of six cameras, in the case that the moving direction of the goggle goes beyond 30 degrees in the rightward direction, the photographing screen B2 which has been provided for the right eye till now is selected as the screen for the left eye, and the photographing screen B3 of the camera A3 which is one right side of the camera A2 is selected as the screen for the right eye. When the direction of the goggle changes and goes beyond 90 degrees in the clockwise direction, photographing screen B3 is selected for the left eye, and the photographing screen B4 is selected for the right eye. Fig. 7B shows how the selected photographing screen and the cut-out screen change from Fig. 7A when the goggle moves at an angle θ = 120 degrees in the clockwise direction from the reference direction N.

In the same manner, when the direction of the goggle goes beyond 30 degrees in the leftward direction from the original direction, the photographing screen B6 is selected for the left eye, and the photographing screen B1 is selected for the right eye. When the direction of the goggle goes beyond 90 degrees in the leftward direction after the further movement, the photographing screen B5 is selected for the left eye, and the photographing screen B6 is selected for the right eye.

As long as all the photographing screens Bi are prepared in a state in which the width center is the reference direction N of the camera unit, the width centers of the cut-out display screens Dl and Dr are the direction in which the goggle turns, regardless of which photographing screen is selected.

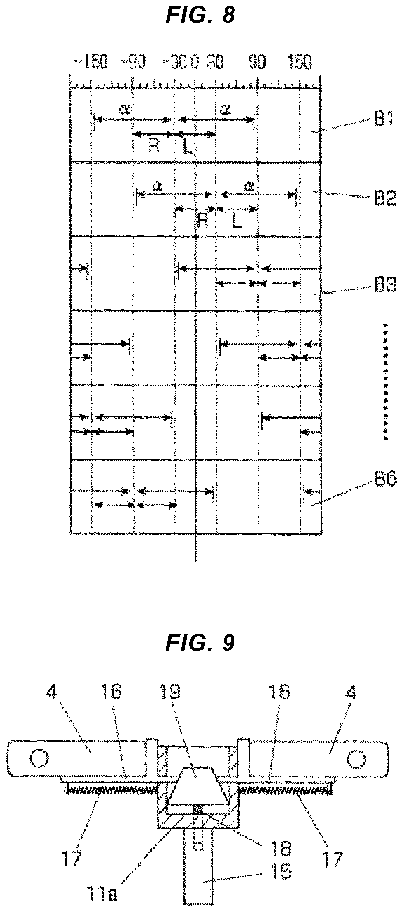

Fig. 8 is a view showing how the direction of the goggle and the selected state of the photographing screens Bi (i = 1 to 6) are, in the case of six cameras. As shown in Fig. 5, each of the cameras Ai (i = 1 to n) has charge of an area of (2 x 360/n) + α degree, here an area of 120 + α degrees because of n = 6, in which the view angle of the goggle in the horizontal direction is set to α.

More specifically, the range of 60 degrees in the clockwise direction from the direction in which each of the cameras Ai turns is a range L which photographs the image for the left eye together with the rightward adjacent camera forming a pair, and the range of 60 degrees in the clockwise direction is a range R which photographs the image for the right eye together with the leftward adjacent camera forming a pair. Since the view angle of the width w of the cut-out display screen is α, a range (2 x 360/n) + α degrees which is α/2 expanded outside the ranges corresponds to a photographing range which each of the cameras Ai has charge of.

The area which each of the cameras has charge of is the area on the equator. In the goggle for the entire-celestial-sphere binocular stereoscopic viewing, the angle width α cut out of the photographing screen as the display screen when turning the goggle upward or downward is expanded, and the area which is had charge of is accordingly expanded. In the adjacent camera and the holder, the shape and dimension of the holder and the number of the cameras may be determined in such a manner that they are not captured on the area which each of the cameras has charge of.

In order to prevent the holder 11 from being captured on the screen which is cut out when turning the goggle 3 directly above and directly below, the holder 11 is set to such a magnitude and shape that the holder 11 does not enter into an area of 180 degrees + β degree in a height direction, in which β is a view angle of the goggle 3 in the height direction (refer to Fig. 6). As a result, when turning the goggle directly above and directly below, it is possible to display the image of the view angle β in the height direction provided in the goggle 3 without conversion of the photographing screen. When the goggle moves beyond the directly above and the directly below, the photographing screen selected at that time point is changed.

As is understood from the description mentioned above, in the screen photographed by each of the cameras, there exists a range which is not displayed on the display of the goggle. Therefore, the camera to be used is not limited to the camera which can photograph the complete entire-celestial-sphere or omnidirectional state, but may be a partly lacking entire-celestial-sphere or omnidirectional camera. For example, even in an entire-celestial-sphere camera which can not photograph a conical part having an apex angle 60 degrees in the directly below portion, the entire-celestial-sphere binocular stereoscopic image according to the invention can be provided by arranging the camera in a state in which the directly below direction is set to the direction of the holder center so as to convert the direction by the delivery server.

The holder 11 is attached to a support post 15 or a helmet, however, the support post 15 or a body of the user wearing the helmet is captured on the image which is observed by the goggle. Since the support post or the helmet is of course in a field of view in the case that the user observes in the field, the image on which they are captured is rather a natural image, and is not generally an obstacle for providing the entire-celestial-sphere image or the omnidirectional image.

Further, the entire-celestial-sphere binocular stereoscopic image can be provided in the air by mounting the holder 11 to a flying object. In this case, if the flying object is small in size, the binocular stereoscopic image can be provided from the air by forming the holder and the flying object in such a magnitude and shape as not to enter into the area in the lateral direction and the height direction of the camera mentioned above, and sending the photographing screen to the delivery server by wireless.

As mentioned above, it is possible to achieve the omnidirectional binocular stereoscopic view or the omnidirectional and whole height binocular stereoscopic view by setting the photographing screens for the left eye and the right eye to the photographing screens for the left camera and the right camera in the direction in which the goggle turns every 60 degrees change (in the case that the arranged number of the camera is six) in the direction in which the goggle turns, cutting out the display screen having the width w (the angle α in the lateral direction) and the height h (the angle β in the height direction) which corresponds to the view angle of the display provided in the goggle in a state in which the width center is the direction in which the goggle turns from the photographing screen, and displaying on the displays for the left eye and the right eye.

The photographing screen which is a base of cutting out the display screen is switched in the directions of ± 30 degrees, ± 90 degrees and ± 150 degrees from the reference direction N in the example in Fig. 8, however, the photographing screen is not necessarily switched with these angles. Since each of the photographing screens Bi is the omnidirectional scree, it is, for example, possible to cut out of the photographing screen B1 the display screen which moves rightward at 35 degrees from the reference direction N. Therefore, by switching with a little time delay which is applied to the motion of the goggle, it is possible to prevent the image from being frequently switched due to the slight motion or vibration of the goggle when the goggle turns to the direction of switching the photographing screen. Further, the image can be smoothly switched in such a manner as to be switched while feeding in and feeding out for a short time when being switched.

A distance between the lenses of the adjacent cameras in a plurality of cameras A is based on the distance between the human both eyes, however, there is a case that the natural stereoscopic view can be obtained by somewhat widening the distance in some specification of the photographing object or the goggle. Taking this matter into consideration, it can be thought to use a holder having such a structure that can adjust the distance between the lenses between the adjacent cameras as the holder 11.

As a structure of the holder mentioned above, for example, there can be thought a structure which can vary the distance between the lenses on the basis of a forward and backward motion of a conical cone by attaching the respective cameras so as to be slidable in a radial direction. For example, as shown in Fig. 9, there is a structure in which each of the cameras is mounted to a support table 16 which is attached to a holder base 11 a so as to be slidable in a radial direction, a spring 17 energizing the support tables in a contracting direction (a direction moving to an inner side in the radial direction) is provided, and a base end of the support table 16 is brought into contact with a cone (a conical member) 19 threadably engaging with a screw 18 provided at the holder center.

The cone moves up and down on the basis of a screwing action by turning the cone 19. In the case that the cone 19 is moved up by turning the cone 19 in a counterclockwise direction, the support table 16 and the camera A attached thereto move to an outer side in the radial direction. In the case that the cone 19 is moved down by turning the cone 19 in the clockwise direction, the support table 16 and the camera A attached thereto moves to an inner side in the radial direction on the basis of the force of the spring 17. As a result, it is possible to adjust the lens distance between the adjacent cameras.

As is understood from the fact that a part of the entire-celestial-sphere screen comes to the omnidirectional screen, it is possible to deliver the omnidirectional image according to the invention. Further, it is possible to provide the omnidirectional binocular stereoscopic image by using the omnidirectional camera as the camera.

### EXPLANATION OF LETTERS OR NUMERALS

1 camera unit
2 server
3 observation device
4 internet
11 camera holder
31l, 31r display
32 receiving means
33 direction fining means
34 screen selecting means
35 screen cut-out means
36 display means
Ai (i = 1 to n) entire-celestial-sphere camera
Bi (i = 1 to n) photographing screen
C pair of images
Dl, Dr display screen
h height of display screen
w width of display screen
α view angle in lateral direction
β view angle in height direction

## Claims

1. A providing method of a binocular stereoscopic image which provides the binocular stereoscopic image in an omnidirectional state or in an omnidirectional state and at a whole height, the method comprising the steps of:
arranging omnidirectional cameras or entire-celestial-sphere cameras at positions of vertices of a regular polygon in which a distance between lenses of the adjacent cameras is approximately set to a distance between both eyes; and
providing to an observation device omnidirectional or entire-celestial-sphere screens at the same timing photographed by the respective cameras as a pair of screens;
wherein the observation device selects the photographing screens of two cameras having an observing direction therebetween from the pair of provided screens as photographing screens for a left eye and a right eye when finding the observing direction, and cuts out of the selected photographing screen a display screen having a width and a height which correspond to a view angle of a display provided in the observation device around the direction so as to display on the display.

2. The providing method of the binocular stereoscopic image according to claim 1, wherein the pair of screens are provided to a plurality of observation devices via an internet.

3. The providing method of the binocular stereoscopic image according to claim 1 or 2, wherein the binocular stereoscopic image is a dynamic picture image.

4. An observation device of a binocular stereoscopic image comprising:
two displays for displaying images for a left eye and a right eye;
a direction finding means;
a receiving means which receives omnidirectional or entire-celestial-sphere screens photographed by a plurality of cameras as pair of screens;
a screen selecting means which selects screens for the left eye and the right eye from the pair of screens in correspondence to a direction which the direction finding means finds;
a screen cut-out means which cuts out of the selected screens display screens for the left eye and the right eye having the direction as a width center; and
a display means which displays the cut-out screens on respective displays.

5. The observation device of the binocular stereoscopic image according to claim 4, wherein in the case that the receiving means receives n omnidirectional or entire-celestial-sphere screens as the pair of screens, the screen selecting means changes the screens for the left eye and the right eye to be selected when the finding direction of the direction finding means goes beyond 360/2n degrees from the direction of the center of the screens for the left eye and the right eye which are currently selected.

6. The observation device of the binocular stereoscopic image according to claim 5, wherein the screen selecting means selects the screen for the right eye which is currently selected as the screen for the left eye when the finding direction of the direction finding means goes beyond 360/2n degree to a rightward direction from the direction of the center of the screens for the left eye and the right eye which are currently selected, and selects the screen for the left eye which is currently selected as the screen for the right eye when the finding direction goes beyond 360/2n degrees to a leftward direction.

7. The observation device of the binocular stereoscopic image according to claim 4, 5 or 6, wherein the cut-out means cuts out of the selected photographing screen a fan-shaped screen which corresponds to a height direction which the direction finding means finds, and the display means converts the fan-shaped screen into a screen having a shape at the height 0 so as to display.

8. A camera unit for providing an omnidirectional binocular stereoscopic image, the camera unit photographing an image provided to the observation device according to claim 4 having the display in which a view angle in a lateral direction in relation to an observer is α, and a view angle in a height direction is β,
wherein the camera unit comprises:
a holder which retains n omnidirectional cameras arranged at positions of vertices of a regular polygon in which number of corners is n,
wherein the holder and the respective cameras are arranged outside an area of (2 x 360/n) + α degrees in a lateral direction around a radial direction passing through a photographic center P of each of the cameras from a center of the regular n polygon and outside an area of β degree in a height direction.

9. A camera unit for providing an omnidirectional binocular stereoscopic image, the camera unit photographing an image provided to the observation device according to claim 4 having the display in which a view angle in a lateral direction in relation to an observer is α, and a view angle in a height direction is β,
wherein the camera unit comprises:
a holder which retains n omnidirectional cameras arranged at positions of vertices of a regular polygon in which number of corners is n,
wherein the holder and the respective cameras are arranged outside an area of (2 x 360/n) + α degrees in a lateral direction around a radial direction passing through a photographic center P of each of the cameras from a center of the regular n polygon and outside an area of 180 + β degrees in a height direction.
